(19) Europäisches Patentamt
European Patent Office
Office européen des brevets

(11) **EP 3 838 955 A1**

(12) **EUROPÄISCHE PATENTANMELDUNG**

(43) Veröffentlichungstag:
**23.06.2021 Patentblatt 2021/25**

(51) Int Cl.:
***C08G 18/10*** *(2006.01)*   ***C08G 18/32*** *(2006.01)*
***C08G 18/73*** *(2006.01)*

(21) Anmeldenummer: **19216825.0**

(22) Anmeldetag: **17.12.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude 4825
51365 Leverkusen (DE)**

(54) **VERFAHREN ZUR HERSTELLUNG EINES THERMOPLASTISCHEN POLYURETHANS MIT NIEDRIGER SCHMELZENTHALPIE**

(57)    Verfahren zur Herstellung eines thermoplastischen Polyurethans G mittels Reaktivextrusion umfassend die folgenden Schritte:

a) Mischen eines Polyisocyanatstroms A und eines Polyolstroms B in einer ersten Mischungseinrichtung 7, so dass ein Mischungsstrom C erhalten wird, wobei die Massenströme des Polyisocyanatstroms A und des Polyolstroms B so eingestellt werden, dass der Isocyanat-Index im Mischungsstrom C von 55 bis 85 bis beträgt,

b) Einleiten des Mischungsstroms C in einen Kreislaufstrom D, der in einem Kreislauf geführt wird, wobei die Monomere des Polyisocyanatstroms A und des Polyolstroms B im Kreislaufstrom D zu OH-funktionellen Prepolymeren weiterreagieren,

c) Abteilen eines Teilstroms vom Kreislaufstrom D als Prepolymerstrom E und Einleiten desselben in einen Extruder 18,

d) Einleiten eines Isocyanatzuführungsstroms F in den Extruder 18 in Extruderarbeitsrichtung stromabwärts der Einleitung des Prepolymerstroms E, wobei die Einleitung in der Weise erfolgt, dass die im Prepolymerstrom E enthaltenen OH-funktionellen Prepolymere und das im Isocyanatzuführungsstrom F enthaltene Polyisocyanat in einem Isocyanat-Index von 85 bis 120 zueinander stehen,

e) Umsetzen des Prepolymerstroms E mit dem Isocyanatzuführungsstrom F in dem Extruder 18 unter Erhalt des thermoplastischen Polyurethans G als Extrudat.

EP 3 838 955 A1

**Beschreibung**

Die vorliegende Erfindung betrifft ein Verfahren zur Herstellung eines thermoplastischen Polyurethans mit niedriger Schmelzenthalpie sowie das damit erhaltene thermoplastische Polyurethan und seine Verwendung.

Thermoplastische Polyurethane sind weitgehend unverzweigte Makromoleküle. Sie werden üblicherweise erhalten, indem bifunktionellen Isocyanate, langkettige Diole, wie z.B. Polyether oder Polyester, und Kettenverlängerer miteinander zur Reaktion gebracht werden. Es gibt verschiedene technische Verfahren zur Herstellung von thermoplastischem Polyurethan (TPU), wobei zwischen diskontinuierlichen Batch-Verfahren und kontinuierlichen Verfahren unterschieden wird. Ein kontinuierliches Verfahren ist die Reaktiv-Extrusion, bei der die zur Herstellung dienenden Ausgangsstoffe in einen Extruder eingetragen werden. Die Reaktiv-Extrusion ist von der Verwendung eines Extruders zur reinen Verarbeitung von Kunststoffen zu unterscheiden. Bei der Reaktiv-Extrusion werden die Ausgangsstoffe durch die Drehbewegungen der Schnecke des Extruders vermischt und reagieren miteinander, sodass eine Polymerschmelze erhalten wird. Diese Polymerschmelze wird dann extrudiert und die erhaltenen Extrudat-Stränge, evtl. nach einer Abkühlung in einem Wasserbad, zu Granulat geschnitten oder direkt in eine bestimmte Form gebracht. Bei der Verarbeitung von TPU in einem Extruder wird ein Granulat aus bereits synthetisiertem TPU im Extruder aufgeschmolzen und die Schmelze extrudiert.

Sofern ein TPU erneut geschmolzen wird können beim Aufschmelzen Inhomogenitäten in der Polymerschmelze dadurch entstehen, dass ein Teil des Granulats schon geschmolzen ist, ein anderer Teil jedoch noch nicht geschmolzen ist. Inhomogene Polymerschmelzen werfen Probleme bei der Verarbeitung im Extruder auf, weil nicht geschmolzene, weitgehend feste oder gelartige Teile langsamer im Extruder bewegt werden als bereits geschmolzenes TPU, das eine weitgehend flüssige oder zähflüssige Polymerschmelze bildet. Die weitgehend festen Teile können sich zudem im Extruder ansammeln und sich schubweise wieder lösen und zu Verunreinigungen der Polymerschmelze führen.

Das Schmelzverhalten von TPU wird durch das Verhältnis von Weich- und Hartsegmenten im Polymer beeinflusst. Dabei werden unter Hartsegmenten die Urethan-Einheiten des Polyurethans verstanden und unter Weichsegmenten die Polyol-Ketten. In einem ausgehärteten, abgekühlten TPU sind Weich- und Hartsegmente in einem polymeren Zweiphasensystem angeordnet. Darin sind die in den Hartsegmenten nebeneinander liegenden Domänen über Wasserstoffbrücken assoziiert und bilden kristalline Strukturen. Die Enden der Polymerketten stellen Defekte dar, die nicht in die kristallinen Strukturen eingebaut werden können. Um TPU mit einem geringeren Kristallisationsgrad aufzuschmelzen, muss weniger Energie aufgebracht werden als für das Aufschmelzen von TPU mit einem hohen Kristallisationsgrad, d.h. die Schmelzenthalpie ist bei einem TPU mit einem vergleichsweise hohen Molekulargewicht niedriger als bei einem TPU mit einem vergleichsweise niedrigen Molekulargewicht.

Die CN 10 714 1437 bezieht sich auf TPU, das in 3D-Druckverfahren verwendet werden soll. Die Druckschrift offenbart eine Synthese durch Reaktivextrusion und lehrt, dass die Schmelzenthalpie eines TPU durch die Zugabe eines Kettenverlängerers beeinflusst werden kann, wobei der Kettenverlängerer ein Cyclodextrin-Derivat ist.

Die CN 10 500 1626 offenbart ebenfalls ein Verfahren für die Reaktiv-Extrusion von Polyurethan. Die Druckschrift offenbart, dass die Fließeigenschaften des TPU durch Zugabe einer Mischung aus Diphenylsilylglykol und Ethylenglykol beeinflusst werden können.

Die US 2017/145146 bezieht sich auf TPU aus Komponenten, die aus nachwachsenden, pflanzlichen Ressourcen stammen. Die Druckschrift offenbart die Synthese in einem Batch-Verfahren und lehrt, dass die Schmelztemperatur eines TPU unter anderem vom Isocyanat-Index und der Polymerisationszeit abhängt.

Es ist Aufgabe der vorliegenden Erfindung, ein Verfahren und eine Vorrichtung für die Herstellung eines thermoplastischen Polyurethans mit einem massengemittelten Molekulargewicht von vorzugsweise 50.000 g/mol bis 70.000 g/mol zur Verfügung zu stellen, wobei das erfindungsgemäße thermoplastische Polyurethan eine im Vergleich zu mit herkömmlichen Herstellungsmethoden hergestellten thermoplastischen Polyurethan mit vergleichbarem massengemittelten Molekulargewicht eine niedrigere Schmelzenthalpie aufweisen soll.

Diese Aufgabe wurde gelöst durch ein Verfahren zur Herstellung eines thermoplastischen Polyurethans mittels Reaktivextrusion umfassend die folgenden Schritte:

a) Mischen eines Polyisocyanatstroms und eines Polyolstroms in einer ersten Mischungseinrichtung, so dass ein Mischungsstrom erhalten wird, wobei die Massenströme des Polyisocyanatstroms und des Polyolstroms so eingestellt werden, dass der Isocyanat-Index im Mischungsstrom von 55 bis 85 beträgt,

b) Einleiten des Mischungsstroms in einen Kreislaufstrom, der in einem Kreislauf geführt wird, wobei die Monomere des Polyisocyanatstroms und des Polyolstroms im Kreislaufstrom zu OH-funktionellen Prepolymeren weiterreagieren,

c) Abteilen eines Teilstroms vom Kreislaufstrom als Prepolymerstrom und Einleiten desselben in einen Extruder,

d) Einleiten eines Isocyanatzuführungsstroms in den Extruder in Extruderarbeitsrichtung stromabwärts der Einleitung des Prepolymerstroms, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 120 zueinander stehen,

e) Umsetzen des Prepolymerstroms mit dem Isocyanatzuführungsstrom in dem Extruder unter Erhalt des thermoplastischen Polyurethans als Extrudat.

Es wurde überraschend gefunden, dass mit dem erfindungsgemäßen Reaktivextrusionsverfahren mit vorgeschalteter Kreislaufführung zur Herstellung eines Prepolymers ein thermoplastisches Polyurethan erhalten wird, welches eine niedrigere Schmelzenthalpie aufweist als thermoplastisches Polyurethan, das mit einem herkömmlichen Batch-Verfahren hergestellt wurde, wobei die Polyurethane unabhängig vom Herstellungsverfahren massengemittelte Molekulargewichte aufweisen, die nur geringfügig voneinander abweichen. Die geringere Schmelzenthalpie bei gleichem Molekulargewicht ist vorteilhaft, weil thermoplastische Polyurethane bei der späteren Verarbeitung zum Endprodukt in der Regel aufgeschmolzen werden und bei geringerer Schmelzenthalpie der Energieaufwand hierfür niedriger ist, wodurch Energie und damit Produktionskosten eingespart werden können.

In Schritt a) des erfindungsgemäßen Verfahrens werden ein Polyisocyanatstrom und ein Polyolstrom in einer ersten Mischungseinrichtung miteinander vermischt, so dass ein Mischungsstrom erhalten wird. Dabei enthält oder besteht der Polyisocyanatstrom bevorzugt aus 1,6-Hexamethylendiisocyanat. Bevorzugt enthält oder besteht der Polyolstrom aus 1,4-Butandiol. Bevorzugt weist der Polyisocyanatstrom eine Temperatur von 20 °C bis 25 °C und unabhängig hiervon der Polyolstrom eine Temperatur von 35 °C bis 45 °C auf. Die Massenströme des Polyisocyanatstroms und des Polyolstroms werden so eingestellt, dass der Isocyanat-Index im Mischungsstrom von 55 bis 85 beträgt.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25 °C.

In einer bevorzugten Ausführungsform kann der Polyolstrom mit dem Polyisocyanatstrom bereits stromaufwärts der ersten Mischungseinrichtung zusammengeführt werden. In einer anderen Ausführungsform werden der Polyolstrom und der Polyisocyanatstrom unabhängig voneinander in die erste Mischungseinrichtung geführt. Bei der ersten Mischungseinrichtung handelt es sich bevorzugt um einen Statikmischer.

In Schritt b) wird der Mischungsstrom in einen Kreislaufstrom eingeleitet, der in einem Kreislauf geführt wird, wobei die Monomere des Polyisocyanatstroms und des Polyolstroms im Kreislaufstrom zu OH-funktionellen Prepolymeren weiterreagieren. In Schritt c) wird ein Teilstrom vom Kreislaufstrom als Prepolymerstrom abgeteilt und in einen Extruder eingeleitet.

Dem Kreislaufstrom werden also Monomere des Polyisocyanatstroms und des Polyolstroms zugeführt und aus dem Kreislaufstrom OH-funktionelles Prepolymer entnommen. Der Kreislaufstrom enthält also eine Mischung aus Monomeren des Polyisocyanatstroms und des Polyolstroms sowie aus oligomeren Reaktionsprodukten und aus dem Prepolymer. Während des Durchlaufens des Kreislaufs reagieren die Monomere sowohl miteinander als auch mit im Kreislaufstrom bereits vorhandenen oligomeren Reaktionsprodukten dieser Monomere. Im Kreislaufstrom findet folglich eine kontinuierliche Reaktion unter Erhalt des OH-funktionellen Prepolymers statt. Dabei können einige Prepolymere den Kreislaufstrom bevorzugt mehrfach durchlaufen, bevor sie als Teilstrom abgeteilt werden. Dies ist von Vorteil, weil durch die Kreislaufführung ein großer Teil der insgesamt freiwerdenden Reaktionswärme bereits abgeführt und die Temperatur besser kontrolliert werden kann als wenn die Reaktanden unmittelbar dem Extruder zugeführt werden.

Der Kreislaufstrom durchläuft bevorzugt mindestens zwei Mischungseinrichtungen, wobei es sich insbesondere um mindestens eine temperierbare Mischungseinrichtung handelt. Bevorzugt weist der Kreislaufstrom eine Temperatur von 160 °C bis 220 °C, bevorzugter von 170 °C bis 190 °C auf.

Bevorzugt wird der Prepolymerstrom in Schritt c) einlassseitig des Extruders in den Extruder eingeleitet. Bevorzugt werden vor dem Einleiten des Prepolymerstroms in den Extruder aus dem Prepolymerstrom Gase und gasförmige Nebenprodukte entfernt. In einer Ausführungsform werden Gase und gasförmige Nebenprodukte entfernt, indem der Prepolymerstrom durch eine Entlüftungseinrichtung mit einem Unterdruck von 0,1 bis 10 mbar unter Normaldruck geführt wird, wobei die Entlüftungseinrichtung vorzugsweise an dem Extruder angeordnet ist. Bevorzugt erfolgt die Entfernung von Gasen und gasförmigen Nebenprodukten durch eine atmosphärische Entgasung, d.h. durch eine Entlüftungseinrichtung, die an dem Extruder angeordnet ist, ohne Anlegung eines Unterdrucks.

In Schritt d) wird ein Isocyanatzuführungsstrom in den Extruder in Extruderarbeitsrichtung stromabwärts der Einleitung des Prepolymerstroms eingeleitet, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 120 zueinander stehen. Bevorzugt enthalten oder bestehen der Polyisocyanatstrom und/oder der Isocyanatzuführungsstrom aus 1,6-Hexamethylendiisocyanat. Insbesondere enthalten oder bestehen der Polyisocyanatstrom und der Isocyanatzuführungsstrom aus 1,6-Hexamethylendiisocyanat. Bevorzugt enthalten oder bestehen der Polyisocyanatstrom und der Isocyanatzuführungsstrom aus 1,6-Hexamethylendiisocyanat und der Polyolstrom enthält oder besteht aus 1,4-Butandiol.

In Schritt e) wird der Prepolymerstrom mit dem Isocyanatzuführungsstrom in dem Extruder umgesetzt unter Erhalt des thermoplastischen Polyurethans als Extrudat. In dem Extruder werden die beiden Komponenten durch die Bewegungen der Förderelemente im Inneren des Extruders sowohl durchmischt als auch in Extruderarbeitsrichtung stromabwärts in Richtung einer Auslassöffnung des Extruders befördert. Dabei reagieren die Komponenten miteinander in einem kontinuierlichen Prozess, so dass das thermoplastische Polyurethan erhalten wird. Bevorzugt nimmt die Viskosität der im Extruder befindlichen Komponenten in Extruderarbeitsrichtung mit fortschreitendem Polymerisationsgrad zu. Im Bereich der Einlassöffnungen für den Prepolymerstrom und den Isocyanatzuführungsstrom liegt im Extruder bevorzugt eine Mischung mit einer niedrigen Viskosität vor, die als Flüssigkeit bezeichnet werden kann, während kurz vor Austritt aus dem Extruder vorzugsweise eine Polymerschmelze vorliegt, welche eine höhere Viskosität aufweist, als der Prepolymerstrom und der Isocyanatzuführungsstrom und als zähflüssig bezeichnet werden kann. Bei dem Extruder handelt es sich bevorzugt um einen gleichläufigen Doppelschneckenextruder. Bevorzugt wird die Umsetzung in Schritt e) bei einer Temperatur von 150 °C bis 220 °C, bevorzugter von 180 °C bis 200 °C durchgeführt.

Die im erfindungsgemäßen Verfahren eingesetzten Polyisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden. Die im erfindungsgemäßen Verfahren eingesetzten Polyole und / oder dessen Vorläuferverbindungen können aus fossilen oder biologischen Quellen gewonnen worden sein.

In einer bevorzugten Ausführungsform werden aus dem thermoplastischen Polyurethan Gase und gasförmige Nebenprodukte entfernt, indem ein Unterdruck von 50 mbar bis 500 mbar, bevorzugter von 80 bis 300 mbar, noch bevorzugter von 100 mbar bis 250 mbar, jeweils unter Normaldruck, an einem Entgasungsschacht angelegt wird, der bevorzugt im in Extruderarbeitsrichtung letzten Drittel des Extruders angeordnet ist. Dazu wird bevorzugt ein Entgasungsdom auf dem Entgasungsschacht angeordnet.

In einer bevorzugten Ausführungsform des erfindungsgemäßen Verfahrens wird in dem Entgasungsschacht ein Entgasungsextruder angeordnet, auf dem sich ein Vakuumdom befindet und ein Unterdruck von 300 mbar bis 500 mbar unter Normaldruck angelegt wird. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördert.

In einer weiteren Ausführungsform wird in dem Entgasungsschacht des Extruders eine Rückhalteeinrichtung angeordnet, auf der sich ein Vakuumdom befindet und ein Unterdruck von 250 mbar bis 350 mbar, bevorzugter von 280 mbar bis 320 mbar, jeweils unter Normaldruck angelegt. Bei dieser Ausführungsform wird ein Doppelschneckenextruder zur Durchführung des Verfahrens verwendet und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken im Extruder wieder in den Extruder gezogen. Als Zwickel wird dabei der Eingreifbereich der beiden Schnecken bezeichnet. In Doppelschneckenextrudern berühren sich die beiden Schneckenelemente nicht, sind aber so ausgestaltet, dass sie ineinandergreifen. Der Eingreifbereich der beiden Schnecken wird Zwickel genannt. Als aufdrehende Schnecke wird die Schnecke bezeichnet, deren Rotationsbewegung von dem Gehäuse des Extruders weg zu dem Bereich zwischen den beiden Achsen der Schneckenelemente gerichtet ist.

Unter Normaldruck wird im Sinne der Erfindung ein Druck von 101 325 Pa = 1,013 25 bar verstanden.

Bevorzugt umfasst das Verfahren die folgenden, zusätzlichen Schritte:

f) Abkühlen des thermoplastischen Polyurethans auf eine Temperatur unter seinen Schmelzpunkt in einer Kühlungseinrichtung, wobei es sich bei der Kühlungseinrichtung bevorzugt um ein Wasserbad handelt,
g) Zerkleinerung des thermoplastischen Polyurethans in einer Zerkleinerungseinrichtung.

Dabei wird durch das Abkühlen des thermoplastischen Polyurethans ein Feststoff erhalten, der in der Zerkleinerungseinrichtung bevorzugt zu einem Granulat zerkleinert wird. Dieses Granulat kann in einem Extrusionsverfahren zur Weiterverarbeitung aufgeschmolzen und die durch das Aufschmelzen erhaltene Polymerschmelze zu einem Formteil verarbeitet werden, zum Beispiel durch Einspritzen in eine Form.

Eine weitere Ausführungsform die Erfindung betrifft ein thermoplastisches Polyurethan erhältlich oder erhalten durch das erfindungsgemäße Verfahren. Bevorzugt weist das durch das erfindungsgemäße Verfahren erhaltene thermoplastische Polyurethan ein massengemitteltes Molekulargewicht $M_w$ von 50.000 g/mol bis 70.000 g/mol ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde, und eine Schmelzenthalpie $\Delta H_{fus}$ von 60 J/g bis 100 J/g ermittelt mit Differentialthermoanalyse gemäß DIN EN ISO 11357-1:2017-02 mit einer Heizrate von 10 K/min im Bereich von 20 °C bis 250 °C auf, wobei $M_w = \Delta H_{fus} * f$, wobei f eine Zahl von 600 bis 900, bevorzugt von 625 bis 900, weiter bevorzugt von 650 bis 850, noch weiter bevorzugt von 700 bis 850 ist.

In einer weiteren Ausführungsform betrifft die Erfindung die Verwendung eines thermoplastischen Polyurethans in einem Formgebungsverfahren unter Aufschmelzen des thermoplastischen Polyurethans, insbesondere zur Herstellung von Innenraumbauteilen von Fahrzeugen.

Eine weitere Ausführungsform der Erfindung betrifft eine Vorrichtung zur Durchführung des erfindungsgemäßen Verfahrens umfassend:

einen Isocyanat-Vorratsbehälter von dem eine Isocyanatleitung zur Förderung eines Polyisocyanatstroms abgeht, die in eine erste Mischungseinrichtung mündet;
optional eine der Isocyanatleitung zugeordnete erste Fördereinrichtung zur Förderung des Polyisocyanatstroms;
optional einen an der Isocyanatleitung angeschlossenen ersten Massendurchflussmesser;
einen Polyol-Vorratsbehälter von dem eine Polyolleitung zur Förderung eines Polyolstroms abgeht, die in die erste Mischungseinrichtung mündet, wobei die Polyolleitung insbesondere stromaufwärts der ersten Mischungseinrichtung mit der Isocyanatleitung zusammengeführt wird;
optional eine der Polyolleitung zugeordnete zweite Fördereinrichtung zur Förderung des Polyolstroms;
optional einen an der Polyolleitung angeschlossenen zweiten Massendurchflussmesser;
eine Kreislaufzuführungsleitung zur Förderung des aus der ersten Mischungseinrichtung austretenden Mischungsstroms, die in eine Kreislaufleitung zur Förderung des Kreislaufstroms und chemischen Umsetzung der Komponenten des Kreislaufstroms mit den Komponenten des Mischungsstroms mündet;
wobei die Kreislaufleitung vorzugsweise in Strömungsrichtung eine zweite Mischungseinrichtung, eine temperierbare Mischungseinrichtung sowie eine temperierbare Fördereinrichtung umfasst;
eine von der Kreislaufleitung abgehende und einlassseitig in einen Extruder mündende Prepolymerzuführungsleitung zur Förderung eines Prepolymerstroms;
ein in der Prepolymerzuführungsleitung vorgesehenes Druckregelventil zur Regulierung des Drucks des Prepolymerstroms;
ein in der Prepolymerzuführungsleitung angeordnetes und insbesondere stromabwärts des Druckregelventils positioniertes Dreiwegeventil, von dem eine in einen Abfallbehälter mündende Abfallleitung abgeht, über die der Prepolymerstrom insbesondere bei Inbetriebnahme, Außerbetriebnahme oder Störung der Vorrichtung ganz oder teilweise in den Abfallbehälter geführt werden kann;
eine vorzugsweise an der Einmündung der Prepolymerzuführungsleitung in den Extruder angeordnete Entlüftungseinrichtung zur Entfernung von Gasen und gasförmigen Nebenprodukten aus dem Prepolymerstrom;
eine vom Isocyanat-Vorratsbehälter oder der Isocyanatleitung abgehende und in Extruderarbeitsrichtung vorzugsweise stromabwärts der Prepolymerzuführungsleitung in den Extruder mündende Isocyanatzuführungsleitung zur Förderung eines Isocyanatzuführungsstroms;
optional eine der Isocyanatzuführungsleitung zugeordnete dritte Fördereinrichtung zur Förderung des Isocyanatzuführungsstroms;
optional einen an der Isocyanatzuführungsleitung angeschlossenen dritten Massendurchflussmesser;
wobei der Extruder zur Umsetzung der Komponenten des Prepolymerstroms mit den Komponenten des Isocyanatzuführungsstroms zu einem thermoplastischen Polyurethan geeignet und diesem ein Entgasungsschacht zur Entfernung von Gasen und gasförmigen Nebenprodukten mittels Unterdruck aus dieser Umsetzung zugeordnet ist, wobei der Entgasungsschacht bevorzugt im in Extruderarbeitsrichtung letzten Drittel des Extruders angeordnet ist;
optional eine hinter dem Auslass des Extruders angeordnete Kühlungseinrichtung, vorzugsweise ein Wasserbad, zur Abkühlung des thermoplastischen Polyurethans auf eine Temperatur unter seinen Schmelzpunkt;
optional eine sich an die Kühlungseinrichtung anschließende Zerkleinerungseinrichtung zur Zerkleinerung des abgekühlten thermoplastischen Polyurethans.

In einer bevorzugten Ausführungsform der Vorrichtung, mündet die Polyolleitung in die erste Mischungseinrichtung, d.h. sie mündet nicht stromaufwärts der ersten Mischungseinrichtung in die Isocyanatleitung.

Bevorzugt wird als erste Fördereinrichtung und/oder als zweite Fördereinrichtung unabhängig voneinander eine Zahnringpumpe und/oder als temperierbare Fördereinrichtung eine Zahnradpumpe eingesetzt.

Bevorzugt wird als erste und/oder zweite Mischungseinrichtung und/oder als temperierbare Mischungseinrichtung unabhängig voneinander ein Statikmischer eingesetzt.

Bevorzugt besteht die Kreislaufleitung aus doppelwandigen, mit einem Heizmittel beheizbaren Leitungen, wobei bevorzugt auch die zweite Mischungseinrichtung, die temperierbare Mischungseinrichtung sowie die temperierbare Fördereinrichtung mit einem Heizmittel beheizbar sind. Dabei ist das Heizmittel bevorzugt für eine Heiz-Temperatur von 160 °C bis 220 °C, bevorzugter von 170 °C bis 190 °C, geeignet.

In einer bevorzugten Ausführungsform umfasst die Vorrichtung einen Entgasungsdom, der auf dem Entgasungsschacht angeordnet ist und zum Anlegen eines Unterdrucks von 50 mbar bis 500 mbar, bevorzugter von 80 mbar bis 300 mbar, noch bevorzugter von 100 mbar bis 250 mbar, jeweils unter Normaldruck, geeignet ist.

In einer bevorzugten Ausführungsform umfasst die Vorrichtung einen Entgasungsextruder, der in dem Entgasungsschacht angeordnet ist und auf dem sich ein Vakuumdom befindet. Der Entgasungsextruder und der Vakuumdom sind für das Anlegen einen Unterdrucks von 300 mbar bis 500 mbar unter Normaldruck geeignet. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördert. Bevorzugt wird der Entgasungsextruder so in dem Entgasungsschacht angeordnet, dass die Schnecken des Entgasungsextruders nur einen Abstand von 0,5 cm bis 5 cm, bevorzugt 0,8 cm bis 2,5 cm, bevorzugter 1 cm bis 2 cm, jeweils zu den Schnecken des Extruders, in dem die Polymerisation stattfindet, haben.

In einer weiteren Ausführungsform umfasst die Vorrichtung eine Rückhalteeinrichtung, die in dem Entgasungsschacht des Extruders angeordnet ist und auf der sich ein Vakuumdom befindet. Die Rückhalteeinrichtung und der Vakuumdom sind für das Anlegen eines Unterdrucks von 250 mbar bis 350 mbar, bevorzugter von 280 mbar bis 320 mbar, jeweils unter Normaldruck geeignet. Bei dieser Ausführungsform ist der Extruder ein Doppelschneckenextruder und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken im Extruder wieder in den Extruder gezogen.

Bevorzugt ist der Extruder ein Planetwalzenextruder oder ein Schneckenextruder, wobei der Extruder bevorzugter ein gleichläufiger Doppelschneckenextruder ist.

Eine weitere Ausführungsform der Erfindung betrifft ein thermoplastisches Polyurethan, das ein massengemitteltes Molekulargewicht $M_w$ von 50.000 g/mol bis 70.000 g/mol ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde, und eine Schmelzenthalpie $\Delta H_{fus}$ von 60 J/g bis 100 J/g ermittelt mit Differentialthermoanalyse gemäß DIN EN ISO 11357-1:2017-02 mit einer Heizrate von 10 K/min im Bereich von 20 °C bis 250 °C aufweist, wobei $M_w = \Delta H_{fus} * f$, wobei f eine Zahl von 600 bis 900, bevorzugt von 625 bis 900, weiter bevorzugt von 650 bis 850, noch weiter bevorzugt von 700 bis 850 ist.

Die Erfindung betrifft insbesondere die folgenden Ausführungsformen:

In einer ersten Ausführungsform betrifft die Erfindung ein Verfahren zur Herstellung eines thermoplastischen Polyurethans mittels Reaktivextrusion umfassend die folgenden Schritte:

a) Mischen eines Polyisocyanatstroms und eines Polyolstroms in einer ersten Mischungseinrichtung, so dass ein Mischungsstrom erhalten wird, wobei die Massenströme des Polyisocyanatstroms und des Polyolstroms so eingestellt werden, dass der Isocyanat-Index im Mischungsstrom von 55 bis 85 beträgt,

b) Einleiten des Mischungsstroms in einen Kreislaufstrom, der in einem Kreislauf geführt wird, wobei die Monomere des Polyisocyanatstroms und des Polyolstroms im Kreislaufstrom zu OH-funktionellen Prepolymeren weiterreagieren,

c) Abteilen eines Teilstroms vom Kreislaufstrom als Prepolymerstrom und Einleiten desselben in einen Extruder,

d) Einleiten eines Isocyanatzuführungsstroms in den Extruder in Extruderarbeitsrichtung stromabwärts der Einleitung des Prepolymerstroms, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 120 zueinander stehen,

e) Umsetzen des Prepolymerstroms mit dem Isocyanatzuführungsstrom in dem Extruder unter Erhalt des thermoplastischen Polyurethans als Extrudat.

In einer zweiten Ausführungsform betrifft die Erfindung ein Verfahren nach Ausführungsform 1, wobei der Polyisocyanatstrom und/oder der Isocyanatzuführungsstrom 1,6-Hexamethylendiisocyanat enthalten oder daraus bestehen, wobei insbesondere der Polyisocyanatstrom und der Isocyanatzuführungsstrom 1,6-Hexamethylendiisocyanat enthalten oder daraus bestehen.

In einer dritten Ausführungsform betrifft die Erfindung ein Verfahren nach Ausführungsform 1 oder 2, wobei der Polyolstrom 1,4-Butandiol enthält oder daraus besteht.

In einer vierten Ausführungsform betrifft die Erfindung ein Verfahren gemäß einer der Ausführungsformen 1 bis 3, wobei der Polyisocyanatstrom eine Temperatur von 20 °C bis 25 °C und unabhängig hiervon der Polyolstrom eine Temperatur von 35 °C bis 45 °C aufweist.

In einer fünften Ausführungsform betrifft die Erfindung ein Verfahren gemäß einer Ausführungsformen 1 bis 4, wobei vor dem Einleiten des Prepolymerstroms in den Extruder aus dem Prepolymerstrom Gase und gasförmige Nebenprodukte entfernt werden, bevorzugt indem der Prepolymerstrom durch eine Entlüftungseinrichtung mit einem Unterdruck von 0,1 mbar bis 10 mbar unter Normaldruck geführt wird, wobei die Entlüftungseinrichtung vorzugsweise an dem Extruder angeordnet ist.

In einer sechsten Ausführungsform betrifft die Erfindung ein Verfahren gemäß einer Ausführungsformen 1 bis 5, wobei die Umsetzung in Schritt e) bei einer Temperatur von 150 °C bis 280 °C, bevorzugt von 180 °C bis 260 °C durchgeführt wird.

In einer siebten Ausführungsform betrifft die Erfindung ein Verfahren gemäß einer Ausführungsformen 1 bis 6, wobei aus dem thermoplastischen Polyurethan Gase und gasförmige Nebenprodukte entfernt werden, indem ein Unterdruck von 50 mbar bis 500 mbar unter Normaldruck an einem Entgasungsschacht angelegt wird, der bevorzugt im in Extruderarbeitsrichtung letzten Drittel des Extruders angeordnet ist.

In einer achten Ausführungsform betrifft die Erfindung ein Verfahren gemäß einer Ausführungsformen 1 bis 7, wobei das Verfahren die folgenden, zusätzlichen Schritte umfasst:

f) Abkühlen des dem thermoplastischen Polyurethans auf eine Temperatur unter seinen Schmelzpunkt in einer Kühlungseinrichtung,

g) Zerkleinerung des thermoplastischen Polyurethans in einer Zerkleinerungseinrichtung.

In einer neunten Ausführungsform betrifft die Erfindung ein thermoplastisches Polyurethan erhältlich oder erhalten durch ein Verfahren gemäß einer der Ausführungsformen 1 bis 8.

In einer zehnten Ausführungsform betrifft die Erfindung ein thermoplastisches Polyurethan nach Ausführungsform 9, wobei das thermoplastische Polyurethan ein massengemitteltes Molekulargewicht $M_w$ von 50.000 g/mol bis 70.000 g/mol ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde, und eine Schmelzenthalpie $\Delta H_{fus}$ von 60 J/g bis 100 J/g ermittelt mit Differentialthermoanalyse gemäß DIN EN ISO 11357-1:2017-02 mit einer Heizrate von 10 K/min im Bereich von 20 °C bis 250 °C aufweist, wobei $M_w = \Delta H_{fus}$ * f, wobei f eine Zahl von 600 bis 900, bevorzugt von 625 bis 900, weiter bevorzugt von 650 bis 850, noch weiter bevorzugt von 700 bis 850, ist.

In einer elften Ausführungsform betrifft die Erfindung die Verwendung eines thermoplastischen Polyurethans gemäß einer der Ausführungsformen 9 oder 10 in einem Formgebungsverfahren unter Aufschmelzen des thermoplastischen Polyurethans, insbesondere zur Herstellung von Bauteilen von Fahrzeugen.

In einer zwölften Ausführungsform betrifft die Erfindung eine Vorrichtung zur Durchführung eines Verfahrens gemäß einer der Ausführungsformen 1 bis 8, umfassend:

einen Isocyanat-Vorratsbehälter von dem eine Isocyanatleitung zur Förderung eines Polyisocyanatstroms abgeht, die in eine erste Mischungseinrichtung mündet;
optional eine der Isocyanatleitung zugeordnete erste Fördereinrichtung zur Förderung des Polyisocyanatstroms;
optional einen an der Isocyanatleitung angeschlossenen ersten Massendurchflussmesser;
einen Polyol-Vorratsbehälter von dem eine Polyolleitung zur Förderung eines Polyolstroms abgeht, die in die erste Mischungseinrichtung mündet, wobei die Polyolleitung insbesondere stromaufwärts der ersten Mischungseinrichtung mit der Isocyanatleitung zusammengeführt wird;
optional eine der Polyolleitung zugeordnete zweite Fördereinrichtung zur Förderung des Polyolstroms;
optional einen an der Polyolleitung angeschlossenen zweiten Massendurchflussmesser;
eine Kreislaufzuführungsleitung zur Förderung eines aus der ersten Mischungseinrichtung austretenden Mischungsstroms, die in eine Kreislaufleitung zur Förderung des Kreislaufstroms und chemischen Umsetzung der Komponenten des Kreislaufstroms mit den Komponenten des Mischungsstroms mündet;

wobei die Kreislaufleitung vorzugsweise in Strömungsrichtung eine zweite Mischungseinrichtung, eine temperierbare Mischungseinrichtung sowie eine temperierbare Fördereinrichtung umfasst;

eine von der Kreislaufleitung abgehende und einlassseitig in einen Extruder mündende Prepolymerzuführungsleitung zur Förderung eines Prepolymerstroms;

ein in der Prepolymerzuführungsleitung vorgesehenes Druckregelventil zur Regulierung des Drucks des Prepolymerstroms;

ein in der Prepolymerzuführungsleitung angeordnetes und insbesondere stromabwärts des Druckregelventils positioniertes Dreiwegeventil, von dem eine in einen Abfallbehälter mündende Abfallleitung abgeht, über die der Prepolymerstrom insbesondere bei Inbetriebnahme, Außerbetriebnahme oder Störung der Vorrichtung ganz oder teilweise in den Abfallbehälter geführt werden kann;

eine vorzugsweise an der Einmündung der Prepolymerzuführungsleitung in den Extruder angeordnete Entlüftungseinrichtung zur Entfernung von Gasen und gasförmigen Nebenprodukten aus dem Prepolymerstrom;

eine vom Isocyanat-Vorratsbehälter oder der Isocyanatleitung abgehende und in Extruderarbeitsrichtung vorzugsweise stromabwärts der Prepolymerzuführungsleitung in den Extruder mündende Isocyanatzuführungsleitung zur Förderung eines Isocyanatzuführungsstroms;

optional eine der Isocyanatzuführungsleitung zugeordnete dritte Fördereinrichtung zur Förderung des Isocyanatzuführungsstroms;

optional einen an der Isocyanatzuführungsleitung angeschlossenen dritten Massendurchflussmesser;

wobei der Extruder zur Umsetzung der Komponenten des Prepolymerstroms mit den Komponenten des Isocyanatzuführungsstroms zu einem thermoplastischen Polyurethan geeignet und diesem ein Entgasungsschacht zur Entfernung von Gasen und gasförmigen Nebenprodukten mittels Unterdruck aus dieser Umsetzung zugeordnet ist, wobei der Entgasungsschacht bevorzugt im in Extruderarbeitsrichtung letzten Drittel des Extruders angeordnet ist;

optional eine hinter dem Auslass des Extruders angeordnete Kühlungseinrichtung, vorzugsweise ein Wasserbad, zur Abkühlung des thermoplastischen Polyurethans auf eine Temperatur unter seinen Schmelzpunkt;

optional eine sich an die Kühlungseinrichtung anschließende Zerkleinerungseinrichtung zur Zerkleinerung des abgekühlten thermoplastischen Polyurethans.

In einer dreizehnten Ausführungsform betrifft die Erfindung eine Vorrichtung nach Ausführungsform 12, wobei als erste Fördereinrichtung und/oder als zweite Fördereinrichtung unabhängig voneinander eine Zahnringpumpe und/oder als temperierbare Fördereinrichtung eine Zahnradpumpe eingesetzt wird.

In einer vierzehnten Ausführungsform betrifft die Erfindung eine Vorrichtung gemäß einer der Ausführungsformen 12 oder 13, wobei als erste und/oder zweite Mischungseinrichtung und/oder als temperierbare Mischungseinrichtung unabhängig voneinander ein Statikmischer eingesetzt wird.

In einer fünfzehnten Ausführungsform betrifft die Erfindung eine Vorrichtung gemäß einer der Ausführungsformen 12 bis 14, wobei die Kreislaufleitung aus doppelwandigen, mit einem Heizmittel beheizbaren Leitungen besteht, wobei bevorzugt auch die zweite Mischungseinrichtung, die temperierbare Mischungseinrichtung sowie die temperierbare Fördereinrichtung mit einem Heizmittel beheizbar sind.

In einer sechzehnten Ausführungsform betrifft die Erfindung eine Vorrichtung gemäß Ausführungsform 15, wobei das Heizmittel für eine Heiz-Temperatur von 160 °C bis 220 °C geeignet ist, bevorzugt von 170 °C bis 190 °C.

In einer siebzehnten Ausführungsform betrifft die Erfindung eine Vorrichtung gemäß einer der Ausführungsformen 12 bis 16, wobei der Extruder ein Planetwalzenextruder oder ein Schneckenextruder ist, wobei der Extruder bevorzugt ein gleichläufiger Doppelschneckenextruder ist.

In einer achtzehnten Ausführungsform betrifft die Erfindung ein thermoplastisches Polyurethan, das ein massengemitteltes Molekulargewicht von 50.000 g/mol bis 70. 000 g/mol ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde, und eine Schmelzenthalpie $\Delta H_{fus}$ von 60 J/g bis 100 J/g ermittelt mit Differentialthermoanalyse DIN EN ISO 11357-1:2017-02 mit einer Heizrate von 10 K/min im Bereich von 20 °C bis 250 °C aufweist, wobei $M_w = \Delta H_{fus} * f$, wobei f eine Zahl von 600 bis 900, bevorzugt von 625 bis 900, weiter bevorzugt von 650 bis 850, noch weiter bevorzugt von 700 bis 850 ist.

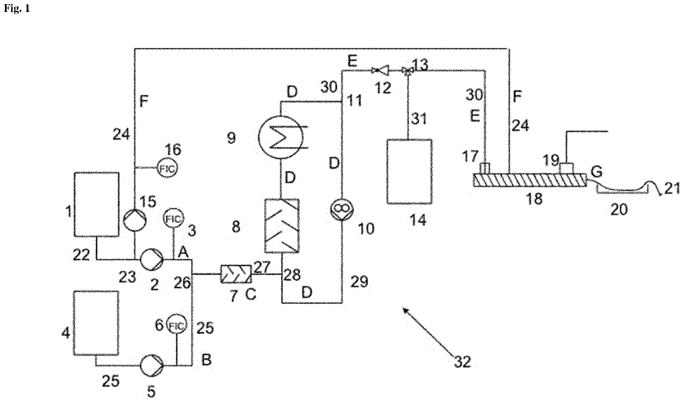

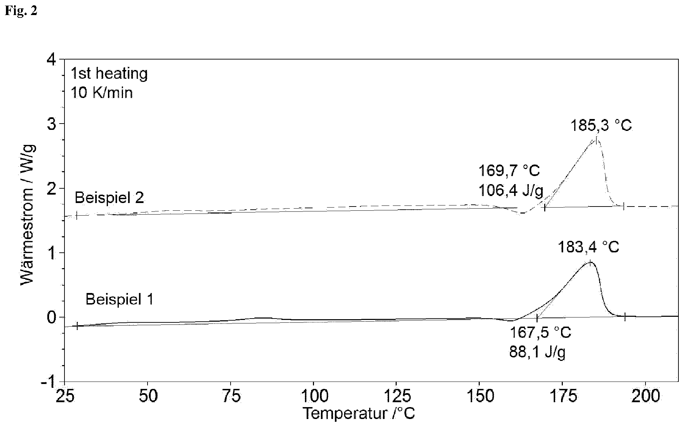

Die vorliegende Erfindung wird im Folgenden anhand der Figuren 1 und 2 näher erörtert. Darin zeigt

Fig.1 eine Vorrichtung zur Durchführung des erfindungsgemäßen Verfahrens, sowie

Fig. 2 ein Thermogramm aus einer Differentialthermoanalyse eines Polyurethans, das mit dem erfindungsgemäßen Verfahren hergestellt wurde und eines Polyurethans das nach einem anderen Verfahren hergestellt wurde

In Fig. 1 ist eine Vorrichtung 32 zur Herstellung von thermoplastischem Polyurethan G nach dem erfindungsgemäßen Verfahren abgebildet. Die Vorrichtung umfasst einen Isocyanat-Vorratsbehälter 1, von dem eine Isocyanatleitung 22 zur Förderung eines Polyisocyanatstroms abgeht, der an einer ersten Einmündung 23 in einen Polyisocyanatstrom A und einen Polyisocyanatstrom F aufgeteilt wird. Der Polyisocyanatstrom A wird stromabwärts der ersten Einmündung 23 mittels einer ersten Fördereinrichtung 2 einer ersten Mischungseinrichtung 7, vorliegend ein Statikmischer, zugeführt, wobei der Massendurchfluss des Polyisocyanatstroms A mittels eines ersten Massendurchflussmessers 3 überwacht wird.

Die Vorrichtung 32 umfasst ferner einen Polyol-Vorratsbehälter 4, von dem eine Polyolleitung 25 abgeht, die der Zuführung eines Polyolstroms B zu der ersten Mischeinrichtung 7 dient. An der Polyolleitung 25 ist eine zweite Fördereinrichtung 5 angeordnet und ein zweiter Massendurchflussmesser 6 angeschlossen.

Stromaufwärts der Mischeinrichtung 7 sind die Isocyanatleitung 22 und die Polyolleitung 25 an einer zweiten Einmündung 26 zusammengeführt, sodass der Polyisocyanatstrom A und der Polyolstrom B der Mischeinrichtung 7 gemeinsam zugeführt werden.

Von der ersten Mischungseinrichtung 7 geht eine Kreislaufzuführungsleitung 27 ab, durch die ein Mischungsstrom C einer dritten Einmündung 28 zugeführt wird, von wo aus dieser als Kreislaufstrom D in einer Kreislaufleitung 29 in einem Kreislauf geführt wird, wobei die Komponenten des Kreislaufstroms D mit den Komponenten des Mischungsstroms C chemisch umgesetzt werden. Die Massenströme des Polyisocyanatstroms A und des Polyolstroms B sind so eingestellt, dass stöchiometrisch mehr OH-Gruppen als Isocyanatgruppen vorhanden sind, sodass sich in der Kreislaufleitung 29 ein OH-funktionelles Polyurethan-Prepolymer bildet. Die Kreislaufleitung 29 umfasst in Strömungsrichtung eine zweite Mischungseinrichtung 8, vorliegend ein Statikmischer, eine temperierbare Mischungseinrichtung 9 sowie eine temperierbare Fördereinrichtung 10. Die temperierbare Mischungseinrichtung 9 ist bevorzugt geeignet Reaktionswärme abzuführen. Über die Kreislaufführung kann der Temperaturanstieg, der durch die Wärmenergie verursacht wird, die bei der Reaktion der Komponenten des Kreislaufstroms D sowie des Mischungsstroms C frei wird, kontrolliert werden.

Aus der Kreislaufleitung 29 wird von dem Kreislaufstrom D an einer zwischen der temperierbaren Mischungseinrichtung 9 und der temperierbaren Fördereinrichtung 10 positionierten vierten Einmündung 11 ein Prepolymerstrom E als Teilstrom abgeteilt, der über eine Prepolymerzuführungsleitung 30 einlassseitig einem Extruder 18 zugeführt wird, der vorliegend als Doppelwellenextruder ausgestaltet ist. Der in der Prepolymerzuführungsleitung 30 vorherrschende Druck kann mittels eines Druckregelventils 12 gesteuert werden. Stromabwärts des Druckregelventils 12 ist in der Prepolymerzuführungsleitung 30 ein Dreiwegeventil 13 positioniert, von dem eine Abfallleitung 31 abgeht, die in einen Abfallbehälter 14 mündet. Über die Abfallleitung 31 kann der Prepolymerstrom E bei Inbetriebnahme, Außerbetriebnahme oder Störung der Vorrichtung 32 ganz oder teilweise in den Abfallbehälter 14 geführt werden.

An der Einmündung der Prepolymerzuführungsleitung 30 in den Extruder 18 ist eine Entlüftungseinrichtung 17 zur Entfernung von Gasen und gasförmigen Nebenprodukten aus dem Prepolymerstrom E vorgesehen. In Extruderarbeitsrichtung stromabwärts der Prepolymerzuführungsleitung 30 befindet sich am Extruder 18 eine Einmündung einer Isocyanatzuführungsleitung 24, die ausgehend von einer stromaufwärts der ersten Fördereinrichtung 2 an der Isocyanatleitung 22 befindlichen ersten Einmündung 23 den Isocyanatzuführungsstrom F aus dem Isocyanat-Vorratsbehälter 1 mittels einer dritten Fördereinrichtung 15 dem Extruder 18 zugeführt. Der Massenfluss in der Isocyanatzuführungsleitung 24 wird mittels eines dritten Massendurchflussmessers 16 überwacht.

In dem Extruder 18 wird der Prepolymerstrom E mit dem Isocyanatzuführungsstrom F zu dem thermoplastischen Polyurethan G chemisch umgesetzt. Dem Extruder 18 ist ein Entgasungsschacht 19 zur Entfernung von Gasen und gasförmigen Nebenprodukten mittels Unterdruck aus dieser Umsetzung zugeordnet, der im in Extruderarbeitsrichtung letzten Drittel des Extruders 18 angeordnet ist. Hinter dem Auslass des Extruders 18 ist eine Kühlungseinrichtung 20 zur Abkühlung des thermoplastischen Polyurethans G auf eine Temperatur unter seinen Schmelzpunkt vorgesehen. An die Kühlungseinrichtung 20 schließt sich eine Zerkleinerungseinrichtung 21 zur Zerkleinerung des abgekühlten thermoplastischen Polyurethans G an.

### Beispiele

Die vorliegende Erfindung wird anhand der nachfolgenden Beispiele weiter erläutert, ohne jedoch darauf beschränkt zu sein.

Es wurden zwei thermoplastische Polyurethane miteinander verglichen, die mit unterschiedlichen Syntheseverfahren hergestellt wurden, dabei wurden die Schmelzenthalpie und das Molekulargewicht dieser beiden Polyurethane untersucht.

Bestimmung der Schmelzenthalpie

Die Bestimmung der Schmelzenthalpie erfolgt mittels Dynamischer Differenzkalorimetrie (engl. Differential scanning calorimetry, DSC) anhand DIN EN ISO 11357-1:2017-02. Die Messung erfolgte an einer Q1000 (TA Instruments). Es wurden zwei Aufheizungen und die Abkühlung im Bereich 20 °C bis 250 °C mit einer Heiz-/Kühlrate von 10 K/min durchgeführt. Die Probenmasse Betrug circa 6 mg. Der Spülgasstrom (Stickstoff) betrug 50 ml/min.

Die Bestimmung der Schmelzenthalpie erfolgte durch Integration der Fläche oberhalb der Glasübergangstemperatur bis circa 10 °C oberhalb des Endes des Schmelzpeaks.

Bestimmung des Molekulargewichtes

GPC-Methode zur Bestimmung von $M_n$ und $M_w$:

Das Zahlenmittel und das Massenmittel der Molmasse wurden mit Hilfe einer Gelpermeationschromatographie (GPC) bestimmt, wobei die zu untersuchende Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde,.

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7$\mu$m, 300 Å PSS PFG 7$\mu$m, 100 Å PSS PFG 7$\mu$m in dieser Reihenfolge (PSS Polymer Standards Service GmbH) |
| Entgasung: | Degaser PSS (PSS Polymer Standards Service GmbH) |
| Injektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

Falls nicht explizit anders angegeben, wurden in der vorliegende Erfindung das Zentrifugenmittel der Molmasse $M_z$ mittels Gelpermeationschromatographie (GPC) unter Verwendung von Polymethylmethacrylat als Standard bestimmt. Die zu vermessende Probe wurde in einer Lösung von 3 g Kaliumtrifluoracetat in 400 Kubikzentimeter Hexafluorisopropanol aufgelöst (Probenkonzentration ca. 2 mg/Kubikzentimeter) und dann mit einer Flussrate von 1 Kubikzentimeter/Minute über eine Vorsäule gegeben und dann über drei in Reihe geschaltete Chromatographiesäulen getrennt, zuerst über eine 1000 Å PSS PFG 7 $\mu$m Chromatographiesäule, dann über eine 300 Å PSS PFG 7 $\mu$m Chromatographiesäule und zuletzt über eine 100 Å PSS PFG 7 $\mu$m Chromatographiesäule. Als Detektor wurde ein Brechungsindex-Detektor (RI-Detektor) verwendet. Das massengemittelte Molekulargewicht wurde aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i}$$

in g/mol
wobei,
$M_i$ die molare Masse der Polymere der Fraktion $i$ ist, so dass $M_i < M_{i+1}$ für alle $i$, in g/mol ist, $n_i$ die Stoffmenge des Polymers der Fraktion $i$, in mol ist.

Erfindungsgemäßes Beispiel 1

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom A bestehend aus 1,6-Hexamethylendiisocyanat zu einem Statikmischer 7 gefördert. Der Durchsatz des Polyisocyanatstroms A wurde mittels eines Massendurchflussmessers 3 (Firma Bronkhorst, Mini Cori-Flow M1X, max. Durchfluss 12 kg/h) gemessen. Die Temperatur des 1,6-Hexamethylendiisocyanats betrug dabei Raumtemperatur.

Aus einer 250 - Liter - Vorlage 4 für 1,4-Butandiol wurde mit Hilfe einer Zahnringpumpe 5 (Firma HNP, MZR 7205) ein Polyolstrom B bestehend aus 1,4-Butandiol zum Statikmischer 7 gefördert. Der Durchsatz des Polyolstroms B wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.

In dem Statikmischer 7 (Sulzer SMX, Durchmesser 6 mm, Verhältnis von Länge zu Durchmesser L/D = 10) wurden der Polyisocyanatstrom A und der Polyolstrom B miteinander gemischt, so dass ein Mischungsstrom C erhalten wurde. Die Massenströme des Polyisocyanatstroms A und des Polyolstroms B wurden so eingestellt, dass der Isocyanat-Index im Mischungsstrom C 78 betrug.

Mischungsstrom C wurde über eine Einmündung 28 in die Kreislaufleitung 29 geleitet, in dem ein Kreislaufstrom D in einem Kreislauf geführt wurde. Stromabwärts der Einmündung 28 wurde der Kreislaufstrom D in einen Statikmischer 8 (Statikmischer äquivalent zu Sulzer SMX, Innendurchmesser 34 mm, L/D=20) geführt. Die Temperatur des Prepolymerstromes D betrug 182 °C.

Stromabwärts des Statikmischers 8 wurde der Kreislaufstrom D in einen temperierbaren statischen Mischer 9 geführt. Dort fand die Oligomerisierung des Kreislaufstroms D mit Mischungsstrom C zum großen Teil statt und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer 9 trat der Kreislaufstrom D mit einer Temperatur von 183 °C aus. Stromabwärts des temperierbaren statischen Mischers 9 wurde an einer Einmündung 11 ein Prepolymerstrom E aus dem Kreislaufstrom D abgeteilt und der Kreislaufstrom D weiter zu einer Zahnradpumpe 10 geführt. Der Prepolymerstrom E wurde in einen Extruder 18 geleitet.

Der Druck des Kreislaufstroms D wurde an einer Zahnradpumpe 10 erhöht. Die Zahnradpumpe 10 (Firma Witte Chem 25,6-3) hatte ein Volumen pro Umdrehung von 25,6 Kubikzentimeter und eine Drehzahl von 50 pro Minute. Der Kreislaufstrom D wurde stromabwärts der Pumpe an Einmündung 28 mit Mischungsstrom C vereinigt, wie bereits beschrieben.

Die Kreislaufleitung 29 bestand aus doppelwandig ausgeführten Rohrleitungen, die mit Thermoöl beheizt waren. Die Heizmitteltemperatur betrug 182 °C. Der Statikmischer 8, der temperierbare statischen Mischer 9 und die Zahnradpumpe 10 bestanden aus Apparaten, die mit Thermoöl beheizt waren. Die Heizmitteltemperatur betrug 182 °C.

Die Reaktivextrusion wurde in einem Extruder 18 bei einer Temperatur von 200 °C und einer Drehzahl von 66 Umdrehungen pro Minute durchgeführt. Der Extruder 18 war ein ZSK 26 MC der Firma Coperion, mit einem Schneckendurchmesser von 26 mm und einem Länge zu Durchmesser Verhältnis von 36 bis 40.

An dem Extruder 18 befand sich eine Entlüftung 17, die bei ca. 1 mbar Unterdruck gegenüber dem Normaldruck betrieben wurde und in der Prepolymerstrom E von eventuell mit dem Polyisocyanatstrom A und dem Polyolstrom B eingeschleppten Inertgasen und möglichen gasförmigen Reaktionsprodukten befreit wurde.

Aus Vorlage 1 wurde mit Hilfe einer Mikrozahnringpumpe 15 (MZR 6355 der Firma HNP) ein Isocyanatzuführungsstrom F bestehend aus 1,6-Hexamethylendiisocyanat entnommen. Der Durchsatz des Isocyanatzuführungsstroms F wurde mittels eines Massendurchflussmessers 16 (Firma Bronkhorst, Mini Cori-Flow, M1X, maximaler Durchfluss 2 kg/h) gemessen. Die Temperatur des 1,6-Hexamethylendiisocyanat betrug Raumtemperatur. Der Isocyanatzuführungsstrom F wurde stromabwärts des Prepolymerstroms E in den Extruder 18 geleitet. In dem Extruder 18 wurde der Prepolymerstrom E mit dem Isocyanatzuführungsstrom F bei einem Isocyanatindex von 99 zu einem thermoplastischen Polyurethan G umgesetzt.

Am im in Durchflussrichtung betrachtet letzten Drittel des Extruders 18 war eine Entgasung 19 angeordnet an der das thermoplastische Polyurethan G bei 200 mbar unter Normaldruck mit Hilfe eines Vakuumdoms, der auf einem Entgasungsschacht des Extruders angeordnet war, von flüchtigen Bestandteilen befreit wurde. Das thermoplastische Polyurethan G wurde nach dem Austritt aus dem Extruder 18 durch zwei Düsen in einem mit deionisierten Wasser (VE-Wasser) gefüllten Wasserbad 20 abgekühlt und durch einen Granulator 21 zu Granulat zerschnitten.

Tabelle 1: Stoffströme bei der Herstellung des TPU in Beispiel 1

|  | [kg/h] |
| --- | --- |
| Strom A (HDI) | 2,911 |
| Strom B (BDO) | 2,000 |
| Strom J (HDI) | 0,784 |
| Strom E (Prepolymer) | 120 |

Referenzbeispiel 2:

In einem Rührkessel (250 ml) wurden 24,59 g 1,4-Butandiol für 30 Minuten unter Rühren (170 Umdrehung pro Minute (U/min)) und Stickstoffeinleitung auf 90 °C geheizt. Anschließend wurde über einen Zeitraum von 45 Minuten 45,39 g HDI kontinuierlich zu dem Butandiol dosiert. Hierbei wurde die Temperatur des Reaktionsgemisches konstant um 4 °C pro Minute erhöht, bis eine Temperatur von 190 °C erreicht wurde (25 Minuten). Sobald eine Produkttemperatur von 190 °C erreicht wurde, wurde die Geschwindigkeit des Rührers auf 300 U/min erhöht. Die Temperatur im Rührkessel wurde konstant zwischen 190 °C und 200 °C gehalten.

Nach Ende der HDI Dosierung wurde die Schmelze weitere 5 Minuten gerührt. Anschließend wurde sie im heißen Zustand in eine Aluminiumform gegossen.

Ergebnisse

Die Schmelzenthalpie und die Molekulargewichte der aus den Beispielen 1 und 2 erhaltenen thermoplastischen Polyurethane wurden nach den oben beschriebenen Verfahren untersucht. Die Ergebnisse sind in Tabelle 2 zusammengefasst:

Tabelle 2: Schmelzenthalpie und Molekulargewicht der erhaltenen Polyurethane

| | Erfindungsgemäß Beispiel 1 | Vergleich Beispiel 2 |
|---|---|---|
| **Schmelzenthalpie $\Delta H_{fus}$ [J/g]** | 88,1 | 106,4 |
| **Schmelztemperatur [C°]** | 183,4 | 185,3 |
| **$M_w$ [g/mol]** | 58.510 | 60.020 |
| **$M_w/M_n$** | 4,97 | 2,55 |
| **$M_z/M_w$** | 2,71 | 2,05 |
| **f** | 664 | 564 |
| $f = M_w/\Delta H_{fus}$ | | |

Die DSC Thermogramme der beiden untersuchten Materialien sind in Figur 2 dargestellt. Die thermoplastischen Polyurethane aus den Beispielen 1 und 2 weisen jeweils ein massengemitteltes Molekulargewicht in einem ähnlichen Bereich von 58.000 g/mol bis ca. 60.000 g/mol auf und auch ähnliche Schmelztemperaturen im Bereich von 183 °C bis 186 °C. Allerdings weist das erfindungsgemäße TPU eine um 17,2 % geringere Schmelzenthalpie im Vergleich zum TPU des Vergleichsbeispiels auf. Aufgrund der niedrigeren Schmelzenthalpie des erfindungsgemäßen TPU muss bei der Weiterverarbeitung durch Aufschmelzen und nachfolgender Formgebung weniger Energie für das Aufschmelzen aufgebracht werden, als für die Weiterverarbeitung des TPU aus dem Vergleichsbeispiel. Wird für das Aufschmelzen der thermoplastischen Polyurethane aus den beiden Beispielen jeweils die gleiche Menge an Energie verwendet, so schmilzt das erfindungsgemäße TPU schneller.

**Bezugszeichenliste**

(A)     Polyisocyanatstrom
(B)     Polyolstrom
(C)     Mischungsstrom
(D)     Kreislaufstrom
(E)     Prepolymerstrom
(F)     Isocyanatzuführungsstrom
(G)     thermoplastisches Polyurethan
(1)     Isocyanat-Vorratsbehälter
(2)     erste Fördereinrichtung
(3)     erster Massendurchflussmesser
(4)     Polyol-Vorratsbehälter
(5)     zweite Fördereinrichtung
(6)     zweiter Massendurchflussmesser
(7)     erste Mischungseinrichtung
(8)     zweite Mischungseinrichtung
(9)     temperierbare Mischungseinrichtung
(10)    temperierbare Fördereinrichtung
(11)    vierte Einmündung
(12)    Druckregelventil
(13)    Dreiwegeventil
(14)    Abfallbehälter
(15)    dritte Fördereinrichtung

(16) dritter Massendurchflussmesser
(17) Entlüftungseinrichtung
(18) Extruder
(19) Entgasungsschacht
(20) Kühlungseinrichtung
(21) Zerkleinerungseinrichtung
(22) Isocyanatleitung
(23) erste Einmündung
(24) Isocyanatzuführungsleitung
(25) Polyolleitung
(26) zweite Einmündung
(27) Kreislaufzuführungsleitung
(28) dritte Einmündung
(29) Kreislaufleitung
(30) Prepolymerzuführungsleitung
(31) Abfallleitung
(32) Vorrichtung

**Patentansprüche**

1. Verfahren zur Herstellung eines thermoplastischen Polyurethans (G) mittels Reaktivextrusion umfassend die folgenden Schritte:

   a) Mischen eines Polyisocyanatstroms (A) und eines Polyolstroms (B) in einer ersten Mischungseinrichtung (7), so dass ein Mischungsstrom (C) erhalten wird, wobei die Massenströme des Polyisocyanatstroms (A) und des Polyolstroms (B) so eingestellt werden, dass der Isocyanat-Index im Mischungsstrom (C) von 55 bis 85 beträgt,
   b) Einleiten des Mischungsstroms (C) in einen Kreislaufstrom (D), der in einem Kreislauf geführt wird, wobei die Monomere des Polyisocyanatstroms (A) und des Polyolstroms (B) im Kreislaufstrom (D) zu OH-funktionellen Prepolymeren weiterreagieren,
   c) Abteilen eines Teilstroms vom Kreislaufstrom (D) als Prepolymerstrom (E) und Einleiten desselben in einen Extruder (18),
   d) Einleiten eines Isocyanatzuführungsstroms (F) in den Extruder (18) in Extruderarbeitsrichtung stromabwärts der Einleitung des Prepolymerstroms (E), wobei die Einleitung in der Weise erfolgt, dass die im Prepolymerstrom (E) enthaltenen OH-funktionellen Prepolymere und das im Isocyanatzuführungsstrom (F) enthaltene Polyisocyanat in einem Isocyanat-Index von 85 bis 120 zueinander stehen,
   e) Umsetzen des Prepolymerstroms (E) mit dem Isocyanatzuführungsstrom (F) in dem Extruder (18) unter Erhalt des thermoplastischen Polyurethans (G) als Extrudat.

2. Verfahren nach Anspruch 1, **dadurch gekennzeichnet, dass** der Polyisocyanatstrom (A) und/oder der Isocyanatzuführungsstrom (F) 1,6-Hexamethylendiisocyanat enthalten oder daraus bestehen, wobei insbesondere der Polyisocyanatstrom (A) und der Isocyanatzuführungsstrom (F) 1,6-Hexamethylendiisocyanat enthalten oder daraus bestehen.

3. Verfahren nach Anspruch 1 oder 2, **dadurch gekennzeichnet, dass** der Polyolstrom (B) 1,4-Butandiol enthält oder daraus besteht.

4. Verfahren nach einem der vorstehenden Ansprüche, **dadurch gekennzeichnet, dass** vor dem Einleiten des Prepolymerstroms (E) in den Extruder aus dem Prepolymerstrom (E) Gase und gasförmige Nebenprodukte entfernt werden, bevorzugt indem der Prepolymerstrom (E) durch eine Entlüftungseinrichtung (17) mit einem Unterdruck von 0,1 mbar bis 10 mbar unter Normaldruck geführt wird, wobei die Entlüftungseinrichtung (17) vorzugsweise an dem Extruder (18) angeordnet ist.

5. Verfahren nach einem der vorstehenden Ansprüche, **dadurch gekennzeichnet, dass** die Umsetzung in Schritt e) bei einer Temperatur von 150 °C bis 220 °C, bevorzugt von 180 °C bis 200 °C durchgeführt wird.

6. Verfahren nach einem der vorstehenden Ansprüche, **dadurch gekennzeichnet, dass** aus dem thermoplastischen Polyurethan (G) Gase und gasförmige Nebenprodukte entfernt werden, indem ein Unterdruck von 50 mbar bis 500 mbar unter Normaldruck an einem Entgasungsschacht (19) angelegt wird, der bevorzugt im in Extruderarbeitsrichtung letzten Drittel des Extruders (18) angeordnet ist.

7. Verfahren nach einem der vorstehenden Ansprüche, **dadurch gekennzeichnet, dass** das Verfahren die folgenden, zusätzlichen Schritte umfasst:

   f) Abkühlen des dem thermoplastischen Polyurethans (G) unter seinen Schmelzpunkt in einer Kühlungseinrichtung (20),
   g) Zerkleinerung des thermoplastischen Polyurethans (G) in einer Zerkleinerungseinrichtung (21).

8. Thermoplastisches Polyurethan erhältlich oder erhalten durch ein Verfahren nach einem der Ansprüche 1 bis 7.

9. Thermoplastisches Polyurethan nach Anspruch 8, **dadurch gekennzeichnet, dass** das thermoplastische Polyurethan ein massengemitteltes Molekulargewicht $M_w$ von 50.000 g/mol bis 70.000 g/mol ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde, und eine Schmelzenthalpie $\Delta H_{fus}$ von 60 J/g bis 100 J/g ermittelt mit Dynamischer Differenzkalorimetrie gemäß DIN EN ISO 11357-1:2017-02 mit einer Heizrate von 10 K/min im Bereich von 20 °C bis 250 °C aufweist, wobei $M_w = \Delta H_{fus} * f$, wobei f eine Zahl von 600 bis 900, bevorzugt von 625 bis 900, weiter bevorzugt von 650 bis 850, noch weiter bevorzugt von 700 bis 850, ist.

10. Verwendung eines thermoplastischen Polyurethans nach den Ansprüchen 8 oder 9 in einem Formgebungsverfahren unter Aufschmelzen des thermoplastischen Polyurethans, insbesondere zur Herstellung von Bauteilen von Fahrzeugen.

11. Vorrichtung zur Durchführung eines Verfahrens nach einem der Ansprüche 1 bis 7, umfassend:

   einen Isocyanat-Vorratsbehälter (1) von dem eine Isocyanatleitung (22) zur Förderung eines Polyisocyanatstroms (A) abgeht, die in eine erste Mischungseinrichtung (7) mündet;
   einen Polyol-Vorratsbehälter (4) von dem eine Polyolleitung (25) zur Förderung eines Polyolstroms (B) abgeht, die in die erste Mischungseinrichtung (7) mündet, wobei die Polyolleitung (25) insbesondere stromaufwärts der ersten Mischungseinrichtung (7) mit der Isocyanatleitung (22) zusammengeführt wird;
   eine Kreislaufzuführungsleitung (27) zur Förderung eines aus der ersten Mischungseinrichtung (7) austretenden Mischungsstroms (C), die in eine Kreislaufleitung (29) zur Förderung des Kreislaufstroms (D) und chemischen Umsetzung der Komponenten des Kreislaufstroms (D) mit den Komponenten des Mischungsstroms (C) mündet; wobei die Kreislaufleitung (29) vorzugsweise in Strömungsrichtung eine zweite Mischungseinrichtung (8), eine temperierbare Mischungseinrichtung (9) sowie eine temperierbare Fördereinrichtung (10) umfasst;
   eine von der Kreislaufleitung (29) abgehende und einlassseitig in einen Extruder (18) mündende Prepolymerzuführungsleitung (30) zur Förderung eines Prepolymerstroms (E);
   ein in der Prepolymerzuführungsleitung (30) vorgesehenes Druckregelventil (12) zur Regulierung des Drucks des Prepolymerstroms (E);
   ein in der Prepolymerzuführungsleitung (30) angeordnetes und insbesondere stromabwärts des Druckregelventils (12) positioniertes Dreiwegeventil (13), von dem eine in einen Abfallbehälter (14) mündende Abfallleitung (31) abgeht, über die der Prepolymerstrom (E) insbesondere bei Inbetriebnahme, Außerbetriebnahme oder Störung der Vorrichtung ganz oder teilweise in den Abfallbehälter (14) geführt werden kann;
   eine vorzugsweise an der Einmündung der Prepolymerzuführungsleitung (30) in den Extruder (18) angeordnete Entlüftungseinrichtung (17) zur Entfernung von Gasen und gasförmigen Nebenprodukten aus dem Prepolymerstrom (E);
   eine vom Isocyanat-Vorratsbehälter (1) oder der Isocyanatleitung (22) abgehende und in Extruderarbeitsrichtung vorzugsweise stromabwärts der Prepolymerzuführungsleitung (30) in den Extruder (18) mündende Isocyanatzuführungsleitung (24) zur Förderung eines Isocyanatzuführungsstroms (F);
   wobei der Extruder (18) zur Umsetzung der Komponenten des Prepolymerstroms (E) mit den Komponenten des Isocyanatzuführungsstroms (F) zu einem thermoplastischen Polyurethan (G) geeignet und diesem ein Entgasungsschacht (19) zur Entfernung von Gasen und gasförmigen Nebenprodukten mittels Unterdruck aus dieser Umsetzung zugeordnet ist, wobei der Entgasungsschacht (19) bevorzugt im in Extruderarbeitsrichtung letzten Drittel des Extruders (18) angeordnet ist;
   optional eine hinter dem Auslass des Extruders (18) angeordnete Kühlungseinrichtung (20), vorzugsweise ein Wasserbad, zur Abkühlung des thermoplastischen Polyurethans (G) auf eine Temperatur unter seinen Schmelzpunkt;

optional eine sich an die Kühlungseinrichtung (20) anschließende Zerkleinerungseinrichtung (21) zur Zerkleinerung des abgekühlten thermoplastischen Polyurethans (G).

12. Vorrichtung nach Anspruch 11, **dadurch gekennzeichnet, dass** als erste Fördereinrichtung (2) und/oder als zweite Fördereinrichtung (5) unabhängig voneinander eine Zahnringpumpe und/oder als temperierbare Fördereinrichtung (10) eine Zahnradpumpe eingesetzt wird.

13. Vorrichtung nach Anspruch 11 oder 12, **dadurch gekennzeichnet, dass** als erste und/oder zweite Mischungseinrichtung (7, 8) und/oder als temperierbare Mischungseinrichtung (9) unabhängig voneinander ein Statikmischer eingesetzt wird.

14. Vorrichtung nach einem der Ansprüche 11 bis 13, **dadurch gekennzeichnet, dass** die Kreislaufleitung (29) aus doppelwandigen, mit einem Heizmittel beheizbaren Leitungen besteht, wobei bevorzugt auch die zweite Mischungseinrichtung (8), die temperierbare Mischungseinrichtung (9) sowie die temperierbare Fördereinrichtung (10) mit einem Heizmittel beheizbar sind, wobei das Heizmittel bevorzugt für eine Heiz-Temperatur von 160 °C bis 220 °C geeignet ist.

15. Vorrichtung einem der Ansprüche 11 bis 14, **dadurch gekennzeichnet, dass** der Extruder (18) ein Planetwalzenextruder oder ein Schneckenextruder ist, wobei der Extruder bevorzugt ein gleichläufiger Doppelschneckenextruder ist.

16. Thermoplastisches Polyurethan, das ein massengemitteltes Molekulargewicht $M_w$ von 50.000 g/mol bis 70.000 g/mol ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde, und eine Schmelzenthalpie $\Delta H_{fus}$ von 60 J/g bis 100 J/g ermittelt mit Differentialthermoanalyse gemäß DIN EN ISO 11357-1:2017-02 mit einer Heizrate von 10 K/min im Bereich von 20 °C bis 250 °C aufweist, wobei $M_w = \Delta H_{fus} * f$, wobei f eine Zahl von 600 bis 900, bevorzugt von 625 bis 900, weiter bevorzugt von 650 bis 850, noch weiter bevorzugt von 700 bis 850 ist.

Fig. 1

Fig. 2

**Europäisches Patentamt**
**European Patent Office**
**Office européen des brevets**

## EUROPÄISCHER RECHERCHENBERICHT

Nummer der Anmeldung

EP 19 21 6825

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 598 283 A1 (BAYER AG [DE]) 25. Mai 1994 (1994-05-25) * Beispiele 2-12 * * Seite 5, Zeile 8 - Zeile 17 * ----- | 1-16 | INV. C08G18/10 C08G18/32 C08G18/73 |
| A | EP 1 031 588 A1 (BAYER AG [DE]) 30. August 2000 (2000-08-30) * Verfahren 1 * ----- | 1-16 | |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 16. Juni 2020 | Sütterlin, Martin |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 6825

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2020

| Im Recherchenbericht angeführtes Patentdokument | Datum der Veröffentlichung | Mitglied(er) der Patentfamilie | Datum der Veröffentlichung |
|---|---|---|---|
| EP 0598283 A1 | 25-05-1994 | EP 0598283 A1<br>JP H06206963 A | 25-05-1994<br>26-07-1994 |
| EP 1031588 A1 | 30-08-2000 | AT 281483 T<br>BR 0000911 A<br>CA 2299079 A1<br>CN 1264720 A<br>DE 19907987 A1<br>EP 1031588 A1<br>ES 2231056 T3<br>HK 1028781 A1<br>JP 4725937 B2<br>JP 2000248171 A<br>KR 20000058166 A<br>TW 591044 B<br>US 6218479 B1 | 15-11-2004<br>24-10-2000<br>25-08-2000<br>30-08-2000<br>31-08-2000<br>30-08-2000<br>16-05-2005<br>28-01-2005<br>13-07-2011<br>12-09-2000<br>25-09-2000<br>11-06-2004<br>17-04-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 107141437
- CN 105001626
- US 2017145146 A

**In der Beschreibung aufgeführte Nicht-Patentliteratur**

- *Firma Witte Chem,* vol. 25, 6-3